# EUROPÄISCHE PATENTSCHRIFT

(11) **EP 3 728 897 B1**
(45) Veröffentlichungstag und Bekanntmachung des Hinweises auf die Patenterteilung: **28.12.2022**
(21) Anmeldenummer: 18808252.3
(22) Anmeldetag: 16.11.2018
(51) Int. Cl.: F16H 1/08

(54) **ZAHNRADGETRIEBE**
GEARWHEEL TRANSMISSION
TRANSMISSION PAR ENGRENAGES

(30) Priorität: 18.12.2017 DE 102017223018
(43) Veröffentlichungstag der Anmeldung: 28.10.2020
(73) Patentinhaber: ZF Friedrichshafen AG, 88046 Friedrichshafen (DE)
(72) Erfinder: REISCH, Matthias, 88214 Ravensburg (DE); ERKENS, Christoph, 52249 Eschweiler (DE); LÜBKE, Eckhardt, 88048 Friedrichshafen (DE); RATTAY, Martin, 38855 Wernigerode (DE); SEEBERGER, Marc, 88094 Oberteuringen (DE)
(86) Internationale Anmeldenummer: PCT/EP2018/081607
(87) Internationale Veröffentlichungsnummer: WO 2019/120798

(56) Entgegenhaltungen:
- EP-A1- 1 493 947
- DE-A1- 3 047 334
- DE-A1-102014 210 686
- JP-A- 2011 121 517

## Beschreibung

Die Erfindung betrifft ein Zahnradgetriebe mit einem ersten und einem zweiten schrägverzahnten Zahnrad zur Übertragung von Momenten in unterschiedlicher Richtung bspw. für Zug- und Schubmomente nach dem Oberbegriff des Anspruchs 1. So ein Zahnradgetriebe ist aus der DE3047334A bekannt.

### Stand der Technik

Bei heutigen Zahnradgetrieben, bspw. im Antriebsstrang für ein Kraftfahrzeug, kommen aus akustischen Gründen vorwiegend Schrägverzahnungen zum Einsatz. Gegenüber einer Geradverzahnung entstehen durch eine Schrägverzahnung zwischen den Zahnrädern zusätzliche Axialkräfte, welche abgestützt werden müssen. Meist werden diese Kräfte über die jeweiligen Wellenlager in das Gehäuse eingeleitet. Durch den mechanischen Zusatzaufwand hierfür entstehen Nachteile in Baugröße und Kosten. Des Weiteren entstehen zusätzliche Lagerverluste, welche den Wirkungsgrad verschlechtern.

Um dieses Problem zu verringern gibt es Lösungen, bei denen die Axialkräfte direkt im Bereich der Zahnräder durch korrespondierende Kontaktflächen an so genannten Druckkämmen ausgeglichen werden.

So zeigt die DE 37 07 992 C2 eine kompakte und kostengünstige Lösung, bei der der Druckkammkontaktpunkt entfernt vom Wälzpunkt liegt. Hierbei ist der Kontaktpunkt direkt unterhalb des Fußkreisdurchmessers eines Zahnrades angeordnet. Wegen der relativ hohen Gleitgeschwindigkeit im Kontaktpunkt ist dieses Konzept bezüglich Wirkungsgrad nachteilig. Dennoch ist diese Variante heute die Meistverbreitete.

Die EP 0 021 223 B1 zeigt eine Ausbildung, bei der der Druckkammkontaktpunkt nahe des Wälzpunktes liegt. Diese Lösung ist wegen der niedrigen Gleitgeschwindigkeit im Kontaktpunkt bezüglich Wirkungsgrad vorteilhaft, erfordert aber einen zusätzlichen Bauaufwand, da zusätzliche Bauteile wie Druckkamm und Axialdruckelemente erforderlich sind.

In der EP 1 493 947 A1 wird versucht die Vorteile der obigen beiden Lösungen zu vereinen, indem der Druckkamm an den seitlichen Zahnradflächen anläuft. Die dadurch entstehende unterbrochene Laufbahn bringt allerdings akustische Nachteile mit sich, da durch den wandernden Krafteinleitungspunkt Schwingungen angeregt werden.

### Aufgabe der Erfindung

Die Aufgabe der vorliegenden Erfindung ist es, den obigen Zielkonflikt aufzulösen und ein kostengünstiges, kompaktes Zahnradgetriebe mit geringem Bauaufwand, geringen Verlusten im Wirkungsgrad und ohne akustische Nachteile vorzuschlagen, welches insbes. für das Fahren mit Zugmoment sowie für die Verwendung in einem Antriebsstrang eines Kraftfahrzeugs wie bspw. in einem Fahrzeuggetriebe geeignet ist.

Die Erfindung geht von der Annahme aus, dass es bei einem Zahnradgetriebe eine bevorzugte Drehmomentrichtung gibt, bei der der Wirkungsgrad besonders wichtig ist. Bei Kraftfahrzeugen ist dies typischerweise das Fahren mit Zugkraft, d.h. im Zugbetrieb unter Zugmoment. Hier sind die Fahrzeitanteile hoch und es kommt bei einem Kraftfahrzeug auf den Kraftstoffverbrauch sowie den Wirkungsgrad und das Geräusch an.

Bei umgekehrtem Vorzeichen des Drehmoments, d.h. bspw. beim Fahren im Schub, sind die Fahrzeitanteile deutlich geringer und es kommt auch weniger auf den Wirkungsgrad des Fahrzeuggetriebes bzw. Kraftfahrzeugs an, da der Fahrer ohnehin verzögert oder sich sogar im Bremsmodus befindet.

### Lösung der Aufgabe und Vorteile der Erfindung

Die Erfindung besteht nun darin, bei einem Zahnradgetriebe der vorgenannten Art die Kontaktflächen bzw. die Kontaktpunkte für Zugmomente und die Kontaktflächen bzw. die Kontaktpunkte für Schubmomente räumlich getrennt anzuordnen, sodass eine erste und zweite Kontaktfläche bzw. erste und zweite Kontaktpunkte vorgesehen sind und dass die ersten und zweiten Kontaktflächen bzw. die ersten und zweiten Kontaktpunkte für Zug- und Schubmomente radial versetzt zueinander angeordnet sind.
(zu A1)

Somit wird in vorteilhafter Weise ein Zahnradgetriebe mit zwei Druckkämmen sowie zwei Paar Laufbahnen vorgeschlagen. Dadurch dass insbesondere die ersten und zweiten Kontaktflächen bzw. Kontaktpunkte für Zug- und Schubmomente radial versetzt zueinander angeordnet sind, werden die Eigenschaften der Kontaktflächen bzw. Kontaktpunkte bestmöglich auf die Anforderungen für das jeweilige Fahren mit Zug- und Schubmomenten angepasst, d.h. dass für das Fahren in Vorzugsdrehmomentrichtung mit Zugmoment sind die Druckkämme optimiert bezüglich Wirkungsgrad und für das Fahren im Schubmoment optimiert bezüglich Kosten.

Besonders vorteilhaft ist eine Weiterbildung der Erfindung, welche vorsieht, dass die erste Kontaktfläche bzw. der erste Kontaktpunkt in der wirkungsgradrelevanten Drehmomentrichtung für Zugmomente nahe des Wälzkreisdurchmessers angeordnet ist. Dies ergibt für die hohen Fahrzeitanteile im Zugbetrieb eine wirkungsgradgünstige Ausbildung, da die Gleitgeschwindigkeiten der beiden Kontaktflächen bzw. der Kontaktpunkte des ersten und zweiten Zahnrads gering sind.

Die Kontaktfläche bzw. der Kontaktpunkt kann dann als nahe des Wälzkreisdurchmessers bezeichnet werden, wenn dieser weniger als zwei (2) Prozent des Achsabstandes der beiden beteiligten Zahnräder vom Wälzkreisdurchmesser entfernt liegt.

Vorteilhafterweise sind die zweite Kontaktfläche bzw. der zweite Kontaktpunkt in der untergeordneten Drehmomentrichtung für Schubmomente unterhalb des Fußkreisdurchmessers eines Zahnrades vorgesehen. Im Schubbetrieb sind üblicherweise keine hohen Fahrzeitanteile zu erwarten, sodass hierfür eine kostengünstige Ausbildung gewählt werden kann. (zu A2)

In einer Weiterbildung der Erfindung wird vorgeschlagen, die erste Kontaktfläche bzw. den ersten Kontaktpunkt für Zugmomente näher am Wälzkreisdurchmesser anzuordnen als die zweite Kontaktfläche bzw. der zweite Kontaktpunkt für Schubmomente. Damit ist in vorteilhafter Weise bereits eine Unterscheidung möglich für Zugund Schubmomente verschiedene Eigenschaften der Kontaktflächen bzw. Kontaktpunkte und damit der Druckkämme vorzuschlagen. (zu A3)

Eine vorteilhafte Weiterbildung der Erfindung sieht vor, dass korrespondierende Laufbahnen für Zug- und Schubmomente geometrisch unterschiedlich ausgeformt sind, wie bspw. kegelig/ kegelig und/oder kegelig/ ballig. (zu A4)

In einer anderen Weiterbildung der Erfindung wird am ersten Zahnrad zumindest eine erste Laufbahn einteilig ausgebildet. Dies ist vorzugsweise die Abstützung im Schubbetrieb, da hier der Wirkungsgrad weniger wichtig ist, d.h. es wird kein separater Druckkamm benötigt. Dies ist von Vorteil, da dabei kein zusätzliches Bauteil erforderlich ist. (zu A5)

In einer Weiterbildung der Erfindung wird am ersten Zahnrad zumindest eine zweite Laufbahn auf einem separaten Bauteil, insbes. einem Druckkamm, vorgesehen. Somit kann vorteilhafterweise die Geometrie der zweiten Laufbahn unabhängig von der ersten Laufbahn gewählt werden. (zu A6)

Es ist selbsterklärend, dass auch am zweiten Zahnrad die erste Laufbahn einteilig mit dem Zahnrad und die zweite Laufbahn ebenso als separates Bauteil ausgeführt sein kann, wie oben bereits in vorteilhafterweise für das erste Zahnrad beschrieben. (zu A7 und 8)

Vorteilhafterweise wird vorgeschlagen, dass die Geometrie der Kontaktfläche zumindest annähernd der Mantelfläche eines Kegelstumpfes entspricht. Dies stellt eine Oberfläche dar, welche einfach und kostengünstig herstellbar ist. (zu A10)

In einer weiteren Ausbildung des Zahnradgetriebes wird vorgeschlagen, dass der Kegelgeometrie von jeweils zumindest einer von zwei einander zugeordneten Laufbahnen eine Balligkeit überlagert ist. Dadurch wird vorteilhafterweise erreicht, dass das Tragbild in der Kontaktfläche auch bei Winkelfehlstellung der Druckkammachsen zueinander, z.B. verursacht durch Wellendurchbiegung, günstig ist und es somit nicht zu erhöhten Flächenpressungen im Kantenbereich kommt. (zu A11)

In einer anderen Weiterbildung der Erfindung ist der Kontaktkreisdurchmesser des treibenden Rades größer ausgebildet als der Wälzkreisdurchmesser. Dadurch wird im Kontaktpunkt auf dem Kontaktkreisdurchmesser die Last in dieselbe Richtung übertragen wie in der Verzahnung und somit vorteilhafterweise Blindleistung vermieden. (zu A12).

In einer vorteilhaften Weiterbildung der Erfindung wird ein dem ersten oder zweiten Zahnrad benachbartes Bauteil als Druckkamm ausgebildet. Dabei kann die Laufbahn eines Druckkamms bspw. direkt in eine Welle oder ein benachbartes Zahnrad eingearbeitet sein, wodurch vorteilhafterweise ein Druckkamm als separates Bauteil eingespart werden kann. (zu A13)

In einer anderen Weiterbildung der Erfindung wird vorgeschlagen, dass der Drucckamm separat ausgebildet und mit dem Zahnrad verschweißt oder verstemmt oder mittels Presssitz gefügt ist. Dabei kann der Druckkamm vorteilhafterweise kraft-, form- oder stoffschlüssig mit dem Zahnrad verbunden sein. (zu A14)

In einer alternativen Weiterbildung der Erfindung wird vorgeschlagen, dass die Verzahnung als separater Zahnring ausgebildet ist, welche auf einem Bauteil befestigt bspw. verschweißt oder verstemmt oder mittels Presssitz oder Kleben gefügt ist und das Bauteil vorteilhafterweise einen Druckkamm aufweist. (zu A15)

In einer weiteren Ausbildung der Erfindung wird vorgeschlagen, dass eines der beiden Zahnräder als schaltbares Losrad ausgebildet ist und keine eigene Axiallagerung aufweist, da das Losrad vorteilhafterweise einen Druckkamm zum Ausgleich der Axialkraft aufweist. (zu A16)

In einer besonders vorteilhaften Weiterbildung wird vorgeschlagen, das erfindungsgemäße Zahnradgetriebe in einem Antriebstrang bspw. für ein Kraftfahrzeug zu verwenden. Dadurch werden die oben genannten Vorteile im Wesentlichen gleichzeitig in einem Fahrzeuggetriebe umgesetzt, nämlich einen guten Wirkungsgrad im Zugbetrieb, niedrige Herstellkosten, eine kompakte Bauweise und eine Wirkungsgrad optimale Auslegung der Druckkämme zu realisieren, unabhängig von der Profilverschiebung der Zahnräder sodass die Zahnräder für sich optimal ausgelegt werden können. Außerdem wird vorteilhafterweise ein Zahnradgetriebe vorgeschlagen, welches im Wesentlichen keine akustischen Nachteile aufweist. (zu A17)

Des Weiteren besteht ein Vorteil der Erfindung darin, durch Mehrfachnutzung einiger Teile die Funktion mit wenigen Bauteilen darzustellen.

### Definitionen

Zum besseren Verständnis der Erfindung insbes. der Beschreibung und der Ansprüche werden nachfolgend die in der Patentanmeldung verwendeten wesentlichen technischen Begriffe definiert wie folgt:
Der "Wälzpunkt" zweier Zahnräder eines Zahnradgetriebes ist der theoretisch ermittelbare Punkt, an dem die Geschwindigkeitsvektoren der beiden Zahnräder identisch sind. (Räumlich betrachtet handelt es sich hierbei um eine Gerade entlang der Längserstreckung der korrespondierenden Zähne und parallel zur Drehachse der Zahnräder)

"Druckkamm" bezeichnet das Bauteil, welches die Laufbahn aufweist
Die "Laufbahn" an einem Druckkamm beinhaltet alle möglichen Kontaktflächen im Verlaufe der Dreh-Bewegung

Die "Kontaktfläche" ist die Fläche an einem Druckkamm, an der korrespondierende Zahnräder die Axialkraft gegenseitig abstützen

Der "Druckkammkontaktpunkt" ist der zentrale Punkt einer Kontaktfläche. In der Regel ist die Stirnseite einer Laufbahn (im Radialschnitt betrachtet) kegelig und die korrespondierende Laufbahn kegelig mit überlagerter Balligkeit ausgeführt. Die Berührstelle (ideal steif betrachtet) ist der Druckkammkontaktpunkt.

Da nicht jede Geometriekombination in der Berührstelle einen Punkt definiert (z.B. Kegel-Kegel → Linie; Ebene-Ebene → Fläche) wird alternativ der "Kontaktpunkt" auch als Punkt der "Kontaktfläche" mit der höchsten Hertz'schen Pressung bezeichnet.

### Figurenbeschreibung

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen.

Es zeigen:
Fig. 1 ein erstes erfindungsgemäßes Zahnradpaar mit einem ersten und einem zweiten Druckkamm in Schnittdarstellung;
Fig. 2 ein erster und ein zweiter Druckkamm in vergrößerter Darstellung ge**mäß Detail "Z" in** **Fig.** 1;
Fig. 3 ein zweites erfindungsgemäßes Zahnradpaar mit nur einem separaten Druckkamm im Längsschnitt;
Fig. 4 ein Druckkamm mit korrespondierenden Laufbahnen in vergrößerter **Darstellung gemäß Detail "Z" in** **Fig.** 3;
Fig. 5 ein drittes erfindungsgemäßes Zahnradpaar mit einem Druckkamm an der Nabe im Längsschnitt;
Fig. 6 ein Druckkamm an der Nabe in vergrößerter Darstellung gemäß Detail **"Z" in** **Fig.** 5;
Fig. 7 ein Zahnradsegment mit einer stirnseitigen Laufbahn in perspektivischer Ansicht;
Fig. 8 ein Kraftfahrzeug mit einem Antriebsstrang in schematischer Darstellung.

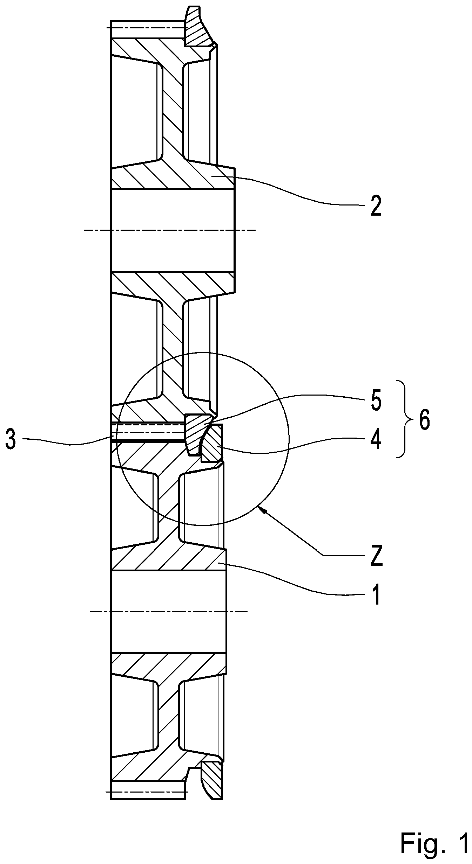

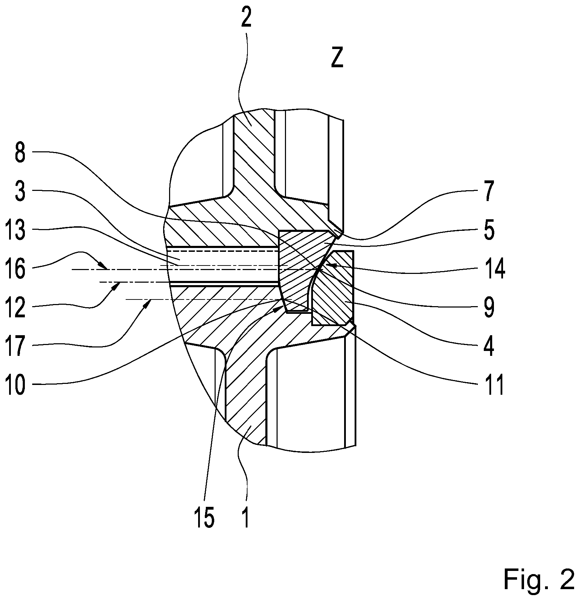

### zu Figur 1 und 2

Fig. 1 zeigt eine mögliche erste Ausführungsform der Erfindung zu einem Zahnradpaar mit einem ersten schrägverzahnten Zahnrad (1) und einem zweiten schrägverzahnten Zahnrad (2), welche über eine Laufverzahnung (3) zur Übertragung von Drehmoment miteinander im Eingriff stehen. Das erste Zahnrad (1) ist mit einem separaten ringförmigen ersten Druckkamm (4) und das zweite Zahnrad (2) ist mit einem separaten ringförmigen zweiten Druckkamm (5) versehen, welche ein korrespondierendes Druckkammpaar (6) bilden.

Der ringförmige zweite Druckkamm (5) ist auf dem zweiten Zahnrad (2) zentriert und mittels Verstemmung (7) axial gesichert (Fig. 2). Der erste Druckkamm (4) ist auf dem ersten Zahnrad (1) ebenfalls zentriert und mittels Verstemmung gesichert. Dem Fachmann ist bekannt, dass neben einer Verstemmung auch andere umformtechnische Verfahren bestehen, um eine formschlüssige Sicherung gegen axiales Verschieben zu erzeugen.

Die Druckkämme (4, 5) weisen ringförmige Laufbahnen (8, 9; 10, 11) auf. Die erste und zweite Laufbahn (8, 9) bilden an ihrer Berührstelle einen ersten Kontaktpunkt (14) auf einem ersten Kontaktkreisdurchmesser (16), welcher sich nahe des Wälzkreisdurchmesser (13) der Verzahnung (3) befindet. Dadurch entstehen nur geringe Gleitgeschwindigkeiten zwischen dem ersten und dem zweiten Druckkamm (4, 5) und man erhält einen guten Wirkungsgrad. Aus diesem Grunde wird die Schrägungsrichtung der Laufverzahnung (3) so gewählt, dass in der Vorzugsdrehmomentrichtung, nämlich im Zug, dieses Druckkammpaar zum Tragen kommt. Daher ist die erste und zweite Laufbahn (8, 9) für die Abstützung der Axialkräfte bei Zugmoment und die dritte und vierte Laufbahn (10, 11) für die Abstützung der Axialkräfte bei Schubmoment vorgesehen.

Das erste Zahnrad (1) weist eine dritte Laufbahn (10) auf, welche direkt in den Körper des Zahnrades (1) eingebracht ist und welche mit einer vierten Laufbahn (11) auf der Innenseite des Druckkamms (5) einen zweiten Kontaktpunkt (15) bildet; dieser liegt auf einem zweiten Kontaktkreisdurchmesser (17) unterhalb des Fußkreisdurchmessers (12) , d.h. auf einem Durchmesser kleiner als der Fußkreisdurchmesser (12).

Zwei Laufbahnen, nämlich die erste Laufbahn (8) und die dritte Laufbahn (10), sind kegelig ausgeführt. Die jeweils korrespondierende zweite Laufbahn (9) und die vierte Laufbahn (11) sind kegelig mit einer überlagerten Balligkeit ausgeführt.

Die ersten und zweiten Laufbahnen (8, 9) bilden einen ersten Kontaktpunkt (14) nahe des Wälzpunktes auf dem Wälzkreisdurchmesser (13). Dadurch entstehen nur geringe Gleitgeschwindigkeiten zwischen den sich berührenden Laufbahnen (8, 9) und man erhält einen guten Wirkungsgrad. Aus diesem Grunde wird die Schrägungsrichtung der Verzahnung (3) so gewählt, dass in der Vorzugsdrehmomentrichtung dieses Laufbahnpaar der ersten und zweiten Laufbahnen (8, 9) zum Tragen kommt, wobei im vorliegenden Beispiel die Vorzugsdrehmomentrichtung dem Zugmoment entspricht.

Folglich kommen bei umgekehrtem Drehmoment wie bspw. bei Schubmoment die dritte und die vierte Laufbahn (10, 11) zum Tragen. Da dieser zweite Kontaktpunkt (15) einen größeren Abstand zum Wälzpunkt bzw. Wälzkreisdurchmesser (13) aufweist, ist die Gleitgeschwindigkeit hier höher und somit der Wirkungsgrad schlechter. Daher werden diese dritten und vierten Laufbahnen (10, 11) für die untergeordnete Drehmomentrichtung verwendet, hier Schub, Verzögern, etc.

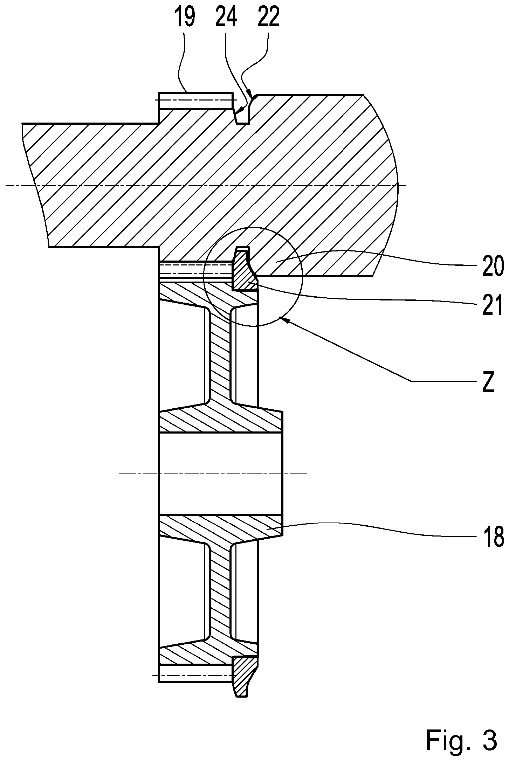

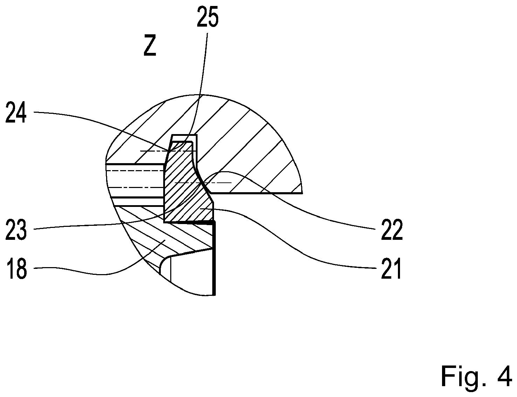

### Zu Figur 3 und 4

Das Wirkprinzip des Ausführungsbeispiels in Fig. 3 ist analog zur Lösung in Fig. 1, jedoch mit einer konstruktiv vereinfachten Ausführung. Ein drittes Zahnrad (18) steht in Eingriff mit einem vierten Zahnrad (19), welches einstückig direkt in eine Welle (20) eingebracht ist. Das dritte Zahnrad (18) ist mit einem separaten dritten Drucckamm (21) versehen, welcher mit dem zugehörigen Zahnrad (18) bspw. verschweißt ist.

Um jedoch einen weiteren separaten Druckkamm einzusparen, wird eine fünfte Laufbahn (22) direkt in die Welle (20) eingebracht. An dieser Stelle kann auch ein beliebiges anderes benachbartes Bauteil (z.B. ein Zahnrad) als Aufnahme für die Laufbahn verwendet werden.

Der dritte Druckkamm (21) (Fig. 4) ist analog zur Darstellung des zweiten Zahnrades (2) und des zweiten Druckkamms (5) in den Figuren 1 und 2 ausgebildet und auf das dritte Zahnrad (18) aufgebracht. Der dritte Druckkamm (21) weist eine sechste Laufbahn (23) auf, welche mit der fünften Laufbahn (22) in der Welle (20) zusammenwirkt. Der dritte Druckkamm (21) enthält des Weiteren eine achte Laufbahn (25), welche wiederum mit einer siebten Laufbahn (24) zusammenwirkt; diese ist ebenso wie die fünfte Laufbahn (22) direkt und einstückig in die Welle (20) eingebracht. Dadurch wird vorteilhafterweise ein weiterer separater Druckkamm eingespart.

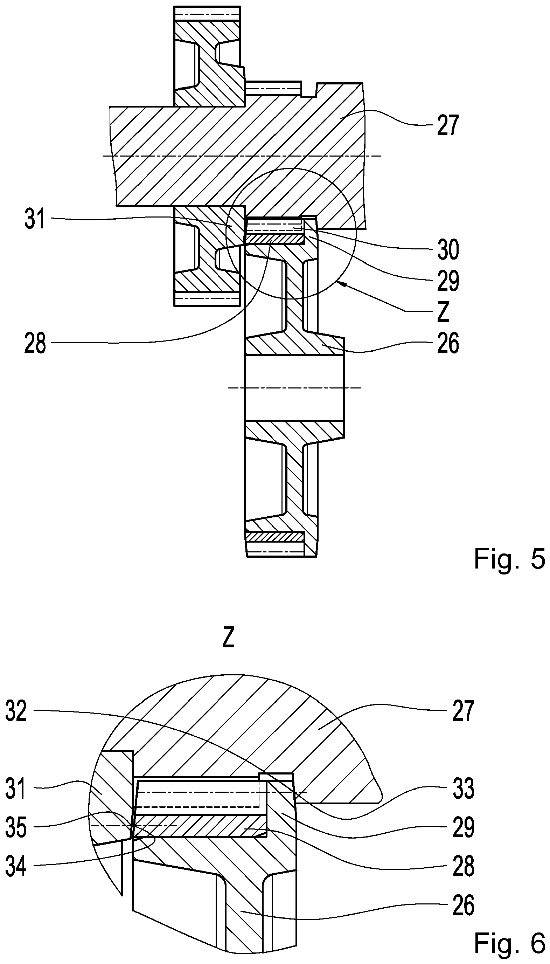

### Zu Figur 5 und 6

Die beiden Kontaktpunkte müssen nicht zwangsläufig, wie bei den bisherigen Abbildungen in den Figuren 1 bis 4, auf einer Seite der Laufverzahnung liegen. Die Kontaktpunkte der Laufbahnen in dem nächsten Ausführungsbeispiel (Figur 5 und 6) liegen auf beiden Seiten der Laufverzahnung.

So ist in dem folgenden Ausführungsbeispiel zum Einen ein Zahnkranz (28) auf eine Nabe (26) aufgebracht. Zur Drehmomentübertragung zwischen Zahnkranz und Nabe bieten sich hier insbesondere Schweißen, eine Mitnahmeverzahnung oder ein Presssitz an. Ein ringförmiger umlaufender Bund an der Nabe (26) dient sowohl als Anschlag bei Montage des Zahnkranzes (28) als auch zur Ausbildung eines vierten Druckkamms (29), welcher somit einstückig mit der Nabe ausgebildet ist.

Zum Anderen ist auf der zweiten Welle (27) eine Laufverzahnung (30) einstückig eingebracht, welche mit dem Zahnkranz (28) zur Übertragung von Drehmoment in Verbindung steht. Direkt benachbart zur Verzahnung (30) ist ein weiteres fünftes Zahnrad (31) auf der zweiten Welle (27) befestigt.

An der äußeren Stirnseite des vierten Druckkamms (29) ist eine neunte Laufbahn (32) angebracht, welche mit einer zehnten Laufbahn (33) zusammenwirkt, welche direkt und einstückig in die zweite Welle (27) eingebracht ist.

Auf der gegenüber liegenden Seite der Laufverzahnung (30) ist eine elfte Laufbahn (34) direkt in die Stirnseite des Zahnkranzes (28) angebracht. Diese korrespondiert mit einer zwölften Laufbahn (35) auf der Stirnseite des fünften Zahnrades (31).

Ein besonderes Merkmal dieser Ausführungsform ist, dass ein benachbartes fünftes Zahnrad (31) genutzt wird um eine zwölfte Laufbahn (35) darzustellen. Ein weiteres Merkmal ist, dass der vierte Druckkamm (29) einteilig mit der Nabe (26) ausgeführt ist und der Zahnkranz (28) auf diesem gefügt wird. Dadurch wird in vorteilhafter Weise die Ausbildung und Anbringung separater Druckkämme vermieden und die Anzahl der verwendeten Bauteile reduziert.

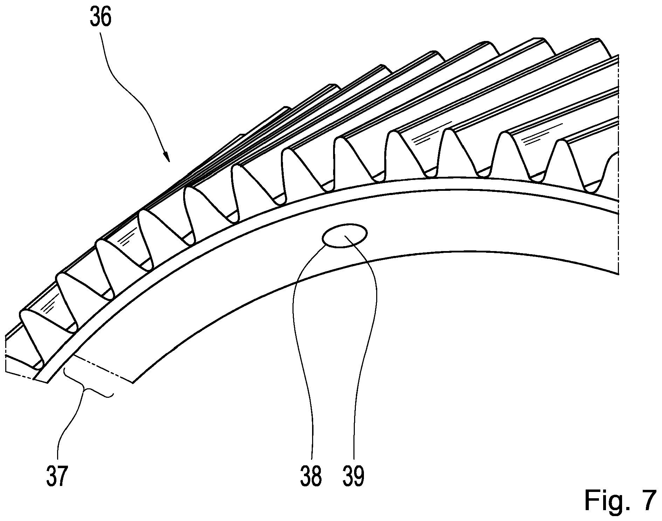

### Zu Figur 7

Figur 7 zeigt die Seitenansicht eines Zahnradsegments (36) mit einer integrierten ringförmigen stirnseitigen Laufbahn (37). An einer Kontaktfläche (38) wird die Axialkraft, in der Regel jene aus der Schrägverzahnung, zum korrespondierenden Zahnrad geleitet. Bei Ausbildung eines minimalen Kontakts zwischen der Laufbahn (37) und einer korrespondierenden Laufbahn eines nicht dargestellten weiteren Zahnrads, wird die Kontaktfläche reduziert bis auf einen Kontaktpunkt (39).

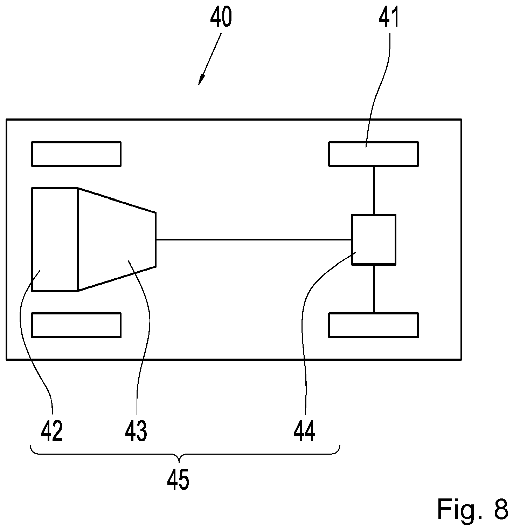

### Zu Figur 8

Die Verwendung eines erfindungsgemäßen Zahnradgetriebes in einem Antriebstrang (45) für ein Kraftfahrzeug (40) ist in Figur 8 dargestellt. Eine Verbrennungskraftmaschine - VKM (42) ist direkt mit einem Fahrzeuggetriebe (43) verbunden und treibt über ein Differential (44) die Räder (41) einer Achse an. Dabei bilden alle Komponenten VKM (42), Fahrzeuggetriebe (43), Differential (44) und Räder (41) den Antriebstrang (45) des Kraftfahrzeugs (40).

### Bezugszeichen

- 1: erstes Zahnrad
- 2: zweites Zahnrad
- 3: Schräg-/ Laufverzahnung
- 4: erster Druckkamm
- 5: zweiter Druckkamm
- 6: Druckkammpaar
- 7: Verstemmung
- 8: erste Laufbahn
- 9: zweite Laufbahn
- 10: dritte Laufbahn
- 11: vierte Laufbahn
- 12: Fußkreisdurchmesser
- 13: Wälzkreisdurchmesser
- 14: erster Kontaktpunkt
- 15: zweiter Kontaktpunkt
- 16: erster Kontaktkreisdurchmesser
- 17: zweiter Kontaktkreisdurchmesser
- 18: drittes Zahnrad
- 19: viertes Zahnrad
- 20: erste Welle
- 21: dritter Druckkamm
- 22: fünfte Laufbahn
- 23: sechste Laufbahn
- 24: siebte Laufbahn
- 25: achte Laufbahn
- 26: Nabe
- 27: zweite Welle
- 28: Zahnkranz
- 29: vierter Druckkamm (Bund)
- 30: Laufverzahnung
- 31: fünftes Zahnrad
- 32: neunte Laufbahn
- 33: zehnte Laufbahn
- 34: elfte Laufbahn
- 35: zwölfte Laufbahn
- 36: Zahnradsegment
- 37: Laufbahn, integriert
- 38: Kontaktfläche
- 39: Kontaktpunkt
- 40: Kraftfahrzeug
- 41: Räder
- 42: VKM
- 43: Getriebe
- 44: Differential
- 45: Antriebstrang

## Patentansprüche

1. Zahnradgetriebe mit einem ersten und einem zweiten schrägverzahnten Zahnrad (1, 2), welche zur Übertragung von Momenten in unterschiedlicher Richtung für Zugund Schubmomente im Eingriff miteinander stehen,
wobei ein treibendes und ein getriebenes Zahnrad definierbar sind,
und die Verzahnungen (3) des ersten und zweiten Zahnrads (1, 2) jeweils einen Fußkreisdurchmesser (12) und einen Wälzkreisdurchmesser (13) aufweisen und
das erste und zweite Zahnrad (1, 2) jeweils korrespondierende ringförmige Drucckämme (4, 5) zum Abstützen entgegengerichteter Axialkräfte durch Zug- und Schubmomente aufweisen,
und korrespondierende Druckkämme (4, 5) jeweils eine Laufbahn (8, 9; 10, 11) mit einem Überdeckungsbereich bilden, sodass eine erste und eine zweite Laufbahn (8, 9) für Zugmomente und eine dritte und vierte Laufbahn (10, 11) für Schubmomente ausgebildet sind
und jeder Überdeckungsbereich eine Kontaktfläche bzw. einen Kontaktpunkt (14, 15) aufweist
und jeder Kontaktpunkt (14, 15) auf einem Kontaktkreisdurchmesser (16, 17) liegt, und die Kontaktflächen bzw. Kontaktpunkte (14) für Zugmomente und die Kontaktflächen bzw. Kontaktpunkte (15) für Schubmomente räumlich getrennt voneinander angeordnet sind,
sodass erste und zweite Kontaktflächen bzw. Kontaktpunkte ausgebildet und
die ersten und zweiten Kontaktflächen bzw. Kontaktpunkte (14, 15) für Zug- und Schubmomente radial versetzt zueinander angeordnet sind,
**dadurch gekennzeichnet, dass** ein Druckkamm (4, 5) mit einer ersten und einer zweiten Laufbahn (8, 9) ausgebildet ist
und, dass die erste Kontaktfläche bzw. der erste Kontaktpunkt (14) für Zugmomente nahe des Wälzkreisdurchmessers (13) und die zweite Kontaktfläche bzw. der zweite Kontaktpunkt (15) für Schubmomente unterhalb des Fußkreisdurchmessers (12) einer Verzahnung (3) vorgesehen ist.

2. Zahnradgetriebe nach Anspruch 1, **dadurch gekennzeichnet, dass** die erste Kontaktfläche bzw. der erste Kontaktpunkt (14) für Zugmomente näher am Wälzkreisdurchmesser (13) angeordnet ist als die zweite Kontaktfläche bzw. der zweite Kontaktpunkt (15) für Schubmomente.

3. Zahnradgetriebe nach Anspruch 1 oder 2, **dadurch gekennzeichnet, dass** korrespondierende Laufbahnen (8, 9, 10, 11) für Zug- und Schubmomente geometrisch unterschiedlich ausgeformt sind, wie bspw. kegelig/ kegelig und kegelig/ ballig.

4. Zahnradgetriebe nach einem der vorhergehenden Ansprüche, **dadurch gekennzeichnet, dass** am ersten Zahnrad (1) zumindest eine dritte Laufbahn (10) einteilig ausgebildet ist.

5. Zahnradgetriebe nach Anspruch 4, **dadurch gekennzeichnet, dass** am ersten Zahnrad (1) zumindest eine zweite Laufbahn (9) auf einem separaten Bauteil insbes. einem ersten Druckkamm (4) vorgesehen ist.

6. Zahnradgetriebe nach Anspruch 4 oder 5, **dadurch gekennzeichnet, dass** an einem Zahnrad (19) zumindest eine fünfte Laufbahn (22, 24) einteilig ausgebildet ist.

7. Zahnradgetriebe nach Anspruch 6, **dadurch gekennzeichnet, dass** am zweiten Zahnrad (2) zumindest eine erste Laufbahn (8, 11) auf einem separaten Bauteil insbes. einem zweiten Druckkamm (5) vorgesehen ist.

8. Zahnradgetriebe nach einem der vorhergehenden Ansprüche, **dadurch gekennzeichnet, dass** die Geometrie der Kontaktfläche (38) zumindest annähernd der Mantelfläche eines Kegelstumpfes entspricht.

9. Zahnradgetriebe nach Anspruch 8, **dadurch gekennzeichnet, dass** der Kegelgeometrie eine Balligkeit überlagert ist.

10. Zahnradgetriebe nach Anspruch 1, **dadurch gekennzeichnet, dass** der Kontaktkreisdurchmesser (16, 17) des treibenden Rades größer ist als der Wälzkreisdurchmesser (13) des treibenden Rades.

11. Zahnradgetriebe nach Anspruch 1, **dadurch gekennzeichnet, dass** ein dem ersten oder zweiten Zahnrad benachbartes Bauteil (29, 31) als Druckkamm ausgebildet wird.

12. Zahnradgetriebe nach einem der Ansprüche 1 bis 10, **dadurch gekennzeichnet, dass** der Druckkamm (4, 5) mit dem Zahnrad (1, 2) verschweißt oder verstemmt oder mittels Presssitz gefügt ist.

13. Zahnradgetriebe nach Anspruch 1, **dadurch gekennzeichnet, dass** die Verzahnung (30) als Zahnkranz (28) ausgebildet und auf einem Bauteil, beispielsweise einer Nabe (26) befestigt ist, beispielsweise verschweißt oder verstemmt oder mittels Presssitz oder Kleben gefügt ist und das Bauteil (26) einen Druckkamm (29) aufweist.

14. Zahnradgetriebe nach Anspruch 1, **dadurch gekennzeichnet, dass** eines der beiden Zahnräder (1, 2) als schaltbares Losrad ausgebildet ist und keine eigene Axiallagerung aufweist.

15. Verwendung eines Zahnradgetriebes nach einem der o.g. Ansprüche in einem Antriebsstrang (45), beispielsweise für ein Kraftfahrzeug.

## Claims

1. Gearwheel transmission having a first and a second helically toothed gear (1, 2) which are in engagement with one another for transmission of torques in different directions for traction and overrun torques,
wherein a driving and a driven gear can be defined,
and the toothings (3) of the first and second gear (1, 2) each have a root circle diameter (12) and a pitch circle diameter (13) and the first and second gear (1, 2) each have corresponding ring-shaped thrust collars (4, 5) for supporting oppositely oriented axial forces due to traction and overrun torques,
and corresponding thrust collars (4, 5) each form a raceway (8, 9; 10, 11) with a region of overlap, such that a first and a second raceway (8, 9) for traction torques and a third and a fourth raceway (10, 11) for overrun torques are formed,
and each region of overlap has a contact surface or a contact point (14, 15),
and each contact point (14, 15) lies on a contact circle diameter (16, 17),
and the contact surfaces or contact points (14) for traction torques and the contact services or contact points (15) for overrun torques are arranged spatially separated from one another,
such that first and second contact surfaces or contact points are formed and the first and second contact surfaces or contact points (14, 15) for traction and overrun torques are arranged radially offset relative to one another,
**characterized in that** a thrust collar (4, 5) with a first and a second raceway (8, 9) is formed,
and **in that** the first contact surface or the first contact point (14) for traction torques is provided close to the pitch circle diameter (13) and the second contact surface or the second contact point (15) for overrun torques is provided below the root circle diameter (12) of a toothing (3).

2. Gearwheel transmission according to Claim 1, **characterized in that** the first contact surface or the first contact point (14) for traction torques is arranged closer to the pitch circle diameter (13) than the second contact surface or the second contact point (15) for overrun torques.

3. Gearwheel transmission according to Claim 1 or 2, **characterized in that** corresponding raceways (8, 9, 10, 11) for traction and overrun torques are geometrically differently shaped, such as conical/conical and conical/crowned.

4. Gearwheel transmission according to one of the preceding claims, **characterized in that** at least a third raceway (10) is formed integrally on the first gear (1).

5. Gearwheel transmission according to Claim 4, **characterized in that**, on the first gear (1), at least a second raceway (9) is provided on a separate component, in particular a first thrust collar (4).

6. Gearwheel transmission according to Claim 4 or 5, **characterized in that** at least a fifth raceway (22, 24) is formed integrally on a gear (19).

7. Gearwheel transmission according to Claim 6, **characterized in that**, on the second gear (2), at least a first raceway (8, 11) is provided on a separate component, in particular a second thrust collar (5).

8. Gearwheel transmission according to one of the preceding claims, **characterized in that** the geometry of the contact surface (38) corresponds at least approximately to the lateral surface of a truncated cone.

9. Gearwheel transmission according to Claim 8, **characterized in that** a crowning is superposed on the cone geometry.

10. Gearwheel transmission according to Claim 1, **characterized in that** the contact circle diameter (16, 17) of the driving gear is greater than the pitch circle diameter (13) of the driving gear.

11. Gearwheel transmission according to Claim 1, **characterized in that** a component (29, 31) adjacent to the first or second gear is in the form of a thrust collar.

12. Gearwheel transmission according to one of Claims 1 to 10, **characterized in that** the thrust collar (4, 5) is welded or caulked or joined by interference fit to the gear (1, 2).

13. Gearwheel transmission according to Claim 1, **characterized in that** the toothing (30) is in the form of a toothed ring (28) and is fastened, for example welded or caulked or joined by interference fit or adhesive bonding, to a component, for example a hub (26), and the component (26) has a thrust collar (29).

14. Gearwheel transmission according to Claim 1, **characterized in that** one of the two gears (1, 2) is in the form of a switchable idler gear and does not have a dedicated axial bearing.

15. Use of a gearwheel transmission according to one of the preceding claims in a drive train (45), for example for a motor vehicle.

## Revendications

1. Transmission par engrenages avec une première et une deuxième roue dentée à denture oblique (1, 2), qui sont en prise l'une avec l'autre pour transmettre des couples dans une direction différente pour des couples de traction et de poussée,
une roue dentée menante et une roue dentée menée pouvant être définies,
et les dentures (3) de la première et de la deuxième roue dentée (1, 2) présentant chacune un diamètre de cercle de pied (12) et un diamètre de cercle primitif (13) et la première et la deuxième roue dentée (1, 2) présentant chacune des collets de butée annulaires correspondants (4, 5) pour soutenir des forces axiales opposées par des couples de traction et de poussée,
et des collets de butée correspondants (4, 5) formant chacun un chemin de roulement (8, 9 ; 10, 11) avec une zone de chevauchement, de telle sorte qu'un premier et un deuxième chemin de roulement (8, 9) sont réalisés pour des couples de traction et un troisième et un quatrième chemin de roulement (10, 11) sont réalisés pour des couples de poussée,
et chaque zone de chevauchement présentant une surface de contact ou un point de contact (14, 15),
et chaque point de contact (14, 15) se situant sur un diamètre de cercle de contact (16, 17),
et les surfaces de contact ou points de contact (14) pour des couples de traction et les surfaces de contact ou points de contact (15) pour des couples de poussée étant agencés séparés les uns des autres dans l'espace,
de telle sorte que des premières et deuxièmes surfaces de contact ou des premiers ou deuxièmes points de contact sont réalisés et les premières et deuxièmes surfaces de contact ou les premiers et deuxièmes points de contact (14, 15) sont agencés en décalage radial les uns par rapport aux autres pour des couples de traction et de poussée,
**caractérisée en ce qu'**un collet de butée (4, 5) est réalisé avec un premier et un deuxième chemin de roulement (8, 9),
et **en ce que** la première surface de contact ou le premier point de contact (14, 15) est prévu(e) pour des couples de traction à proximité du diamètre de cercle primitif (13) et la deuxième surface de contact ou le deuxième point de contact (15) est prévu (e) pour des couples de poussée en dessous du diamètre de cercle de pied (12) d'une denture (3).

2. Transmission par engrenages selon la revendication 1, **caractérisée en ce que** la première surface de contact ou le premier point de contact (14) pour des couples de traction est agencé(e) plus près du diamètre de cercle primitif (13) que la deuxième surface de contact ou le deuxième point de contact (15) pour des couples de poussée.

3. Transmission par engrenages selon la revendication 1 ou 2, **caractérisée en ce que** des chemins de roulement correspondants (8, 9, 10, 11) pour des couples de traction et de poussée ont une forme géométrique différente, comme par exemple conique/conique et conique/bombé.

4. Transmission par engrenages selon l'une quelconque des revendications précédentes, **caractérisée en ce qu'**au moins un troisième chemin de roulement (10) est réalisé en une seule pièce sur la première roue dentée (1).

5. Transmission par engrenages selon la revendication 4, **caractérisée en ce qu'**au moins un deuxième chemin de roulement (9) est prévu sur la première roue dentée (1) sur un composant séparé, notamment un premier collet de butée (4).

6. Transmission par engrenages selon la revendication 4 ou 5, **caractérisée en ce qu'**au moins un cinquième chemin de roulement (22, 24) est réalisé en une seule pièce sur une roue dentée (19).

7. Transmission par engrenages selon la revendication 6, **caractérisée en ce qu'**au moins un premier chemin de roulement (8, 11) est prévu sur la deuxième roue dentée (2) sur un composant séparé, en particulier un deuxième collet de butée (5).

8. Transmission par engrenages selon l'une quelconque des revendications précédentes, **caractérisée en ce que** la géométrie de la surface de contact (38) correspond au moins approximativement à la surface d'enveloppe d'un tronc de cône.

9. Transmission par engrenages selon la revendication 8, **caractérisée en ce qu'**un bombement est superposé à la géométrie conique.

10. Transmission par engrenages selon la revendication 1, **caractérisée en ce que** le diamètre de cercle de contact (16, 17) de la roue menante est plus grand que le diamètre de cercle primitif (13) de la roue menante.

11. Transmission par engrenages selon la revendication 1, **caractérisée en ce qu'**un composant (29, 31) voisin de la première ou de la deuxième roue dentée est réalisé sous forme de collet de butée.

12. Transmission par engrenages selon l'une quelconque des revendications 1 à 10, **caractérisée en ce que** le collet de butée (4, 5) est soudé ou maté ou assemblé par ajustement serré avec la roue dentée (1, 2).

13. Transmission par engrenages selon la revendication 1, **caractérisée en ce que** la denture (30) est réalisée sous forme de couronne dentée (28) et est fixée sur un composant, par exemple un moyeu (26), par exemple soudée ou matée ou assemblée par ajustement serré ou par collage, et le composant (26) présente un collet de butée (29) .

14. Transmission par engrenages selon la revendication 1, **caractérisée en ce que** l'une des deux roues dentées (1, 2) est réalisée sous forme de pignon fou commutable et ne présente pas de position axiale propre.

15. Utilisation d'une transmission par engrenages selon l'une quelconque des revendications précédentes dans une ligne d'entraînement (45), par exemple pour un véhicule automobile.
